# EUROPEAN PATENT APPLICATION

(11) **EP 2 566 109 A2**
(43) Date of publication of application: **06.03.2013**
(21) Application number: 12182502.0
(22) Date of filing: 31.08.2012
(51) Int. Cl.: H04L 12/28, H04L 29/06

(54) **Information processing apparatus and information processing program**

(30) Priority: 02.09.2011 JP 2011191383
(71) Applicant: Kabushiki Kaisha Toshiba, Tokyo 105-8001 (JP); Toshiba Consumer Electronics Holdings Corporation, Tokyo 101-0021 (JP); Toshiba Lighting & Technology Corporation, Yokosuka-shi Kanagawa 237-8510 (JP)
(72) Inventor: Takahashi, Mitsuo, Kanagawa, 237-8510 (JP); Nakagawa, Tatsuya, Kanagawa, 237-8510 (JP)
(74) Representative: Bokinge, Ole

(57) **Abstract**

An information processing apparatus (1) includes an authentication-operation-data generating section (121) that generates, when a type of an appliance is input from a home gateway apparatus (4), authentication operation data from an input type associated with the type of the appliance in appliance data and stores the authentication operation data in a storage device (110), an authentication-operation-data transmitting section(122) that transmits the authentication operation data to the home gateway apparatus (4), an input-operation-data acquiring section (123) that receives, from the home gateway apparatus (4), input operation data input from an input device (540) of an appliance (5) and stores the input operation data in the storage device (110), and an operation-data collating section (124) that compares the authentication operation data and the input operation data, determines whether the authentication operation data and the input operation data coincide with each other, and outputs collation result data. If the authentication operation data and the input operation data coincide with each other, the information processing apparatus (1) causes the home gateway apparatus (4) to authenticate communication for controlling the appliance (5) between the appliance (5) and the home gateway apparatus (4).

## Description

### FIELD

Embodiments described herein relate generally to an information processing apparatus and an information processing program.

### BACKGROUND

According to the development of information apparatuses and communication networks, there are increasing opportunities to connect information apparatuses using networks in premises such as homes. As the networks for connecting the information apparatuses, in particular, wireless networks are used. For example, there are an increasing number of systems that connect home electric appliances to the wireless networks and control the home electric appliances, for example, in homes.

When security is intensified in the wireless networks, a PIN code is sometimes used. For example, the PIN code is printed on a printed matter included in a package of a connection target appliance or a sticker affixed to the connection target appliance. The PIN code is input by the user, whereby the connection target appliance is connected to a wireless network in a home.

There is also a method in which the printed matter or the sticker is not used (see, for example, JP-A-2010-21802). In the method described in JP-A-2010-21802, a PIN code is displayed on, for example, a display section provided in a connection target appliance or a display section of a remote controller of the connection target appliance. A user checks the PIN code and inputs the PIN code to the connection target appliance, whereby the connection target appliance is connected to a network.

However, when the PIN code printed on the printed matter or the sticker is input, the user sometimes may not be able to grasp the PIN code because the printed matter is lost or the printing on the sticker is faded through use of the connection target appliance for many years. In that case, a method such as the method described in JP-A-2010-21802 is also conceivable. However, since the PIN code is a character string that does not have meaning, it is also likely that the user inputs a wrong PIN code and authentication bothers the user.

In the method described in JP-A-2010-21802, the display section has to be provided in the home electric appliance or the remote controller. Therefore, the method may not be able to be applied to a home electric appliance and the like not including display sections.

An object to be achieved by the embodiments is to provide an information processing apparatus and an information processing program for enabling a user to easily connect an appliance to a network.

### DESCRIPTION OF THE DRAWINGS

FIG. 1 is a system configuration diagram of an authentication system according to a first embodiment;
FIG. 2 is a functional block diagram of an authentication supporting server according to the first embodiment;
FIG. 3 is a functional block diagram of apparatuses of a domestic system according to the first embodiment;
FIG. 4 is a sequence chart for explaining processing of the authentication system;
FIG. 5 is a system configuration diagram of an authentication system according to a second embodiment;

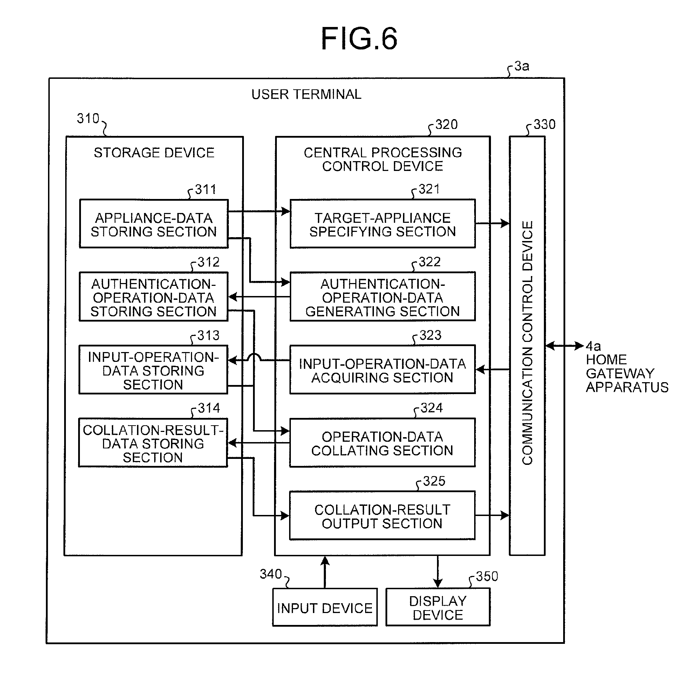

FIG. 6 is a functional block diagram of an authentication supporting server according to the second embodiment;
FIG. 7 is a functional block diagram of apparatuses of a domestic system according to the second embodiment;
FIG. 8 is a sequence chart for explaining processing of the authentication system;
FIG. 9 is a sequence chart for explaining processing of an authentication system according to a third embodiment;
FIG. 10 is a system configuration diagram of an authentication system according to a fourth embodiment;
FIG. 11 is a functional block diagram of an authentication supporting server according to the fourth embodiment;
FIG. 12 is a functional block diagram of apparatuses of a domestic system according to the fourth embodiment;
FIG. 13 is a sequence chart for explaining an authentication method according to the fourth embodiment;
FIG. 14 is a sequence chart for explaining the authentication method;
FIG. 15 is a diagram for explaining, for example, operation start time specified from power measurement data in the authentication method;
FIG. 16 is a sequence chart for explaining an authentication method according to a fifth embodiment;
FIG. 17 is a sequence chart for explaining an authentication method according to a sixth embodiment; and
FIG. 18 is a sequence chart for explaining an authentication method according to a seventh embodiment.

### DETAILED DESCRIPTION

In general, according to one embodiment, there is provided an information processing apparatus and an information processing program for enabling a user to easily connect an appliance to a network.

An embodiment is explained below with reference to the drawings. In the description of the drawings, the same or similar components are denoted by the same or similar reference numerals and signs.

### First Embodiment

### Authentication system

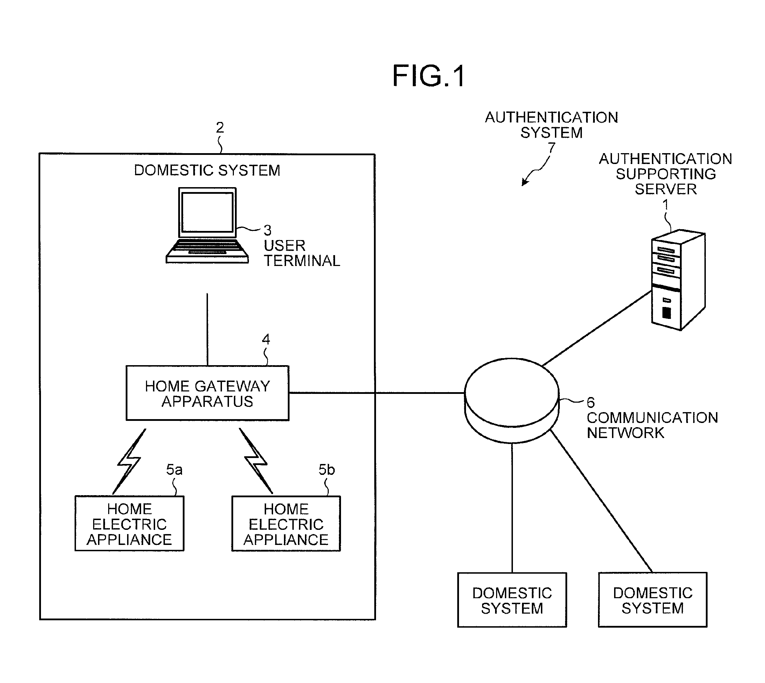

An authentication system 7 according to an embodiment shown in FIG. 1 relates to authentication for new connection of a home electric appliance 5a and a home gateway apparatus (HG) 4 in connecting the home electric appliance 5a anew in a domestic system 2. In the following explanation, the home gateway apparatus 4 is sometimes abbreviated as HG 4.

The domestic system 2 is provided in, for example, a house of a user. The domestic system 2 controls the home electric appliance 5a. In the domestic system 2, a user terminal 3 can acquire a state of the home electric appliance 5a via the HG 4 and receives an instruction for the home electric appliance 5a. The user can control the home electric appliance 5a via a communication network 6 using a cellular phone or the like of the user. If the home electric appliance 5a and the HG 4 are connected after being authenticated using PIN codes, the user terminal 3 or the like can control functions of the home electric appliance 5a.

As shown in FIG. 1, the authentication system 7 includes an authentication supporting server 1 and plural domestic systems 2. The authentication supporting server 1 supports authentication in connection of the home electric appliance 5a in the domestic system 2. The authentication supporting server 1 and the plural domestic systems 2 are connected to each other via a communication network 6. The communication network 6 is a bidirectional communication network such as the Internet. In this embodiment, the plural domestic systems 2 include the same configuration.

The domestic system 2 includes the user terminal 3, the HG 4, the home electric appliance 5a, and a home electric appliance 5b. In an example shown in FIG. 1, the domestic system 2 includes two home electric appliances 5a and 5b. However, the domestic system 2 may include one home electric appliance or three or more home electric appliances. The user terminal 3 and the HG 4 may be connected by a wired network such as a LAN or may be connected by a wireless network. In this embodiment, if it is not particularly necessary to distinguish the home electric appliances 5a and 5b, the home electric appliances 5a and 5b are sometimes simply referred to as "home electric appliance 5".

The HG 4 and the home electric appliance 5 are connected by a wireless network. For example, when the home electric appliance 5 is connected to the domestic system 2 anew, the home electric appliance 5 and the HG 4 are connected by a wireless network without authentication. The PIN code of the HG 4 and the PIN code of the home electric appliance 5 are exchanged via the wireless network not authenticated. Consequently, the connection between the HG 4 and the home electric appliance 5 is authenticated. The user terminal 3 or the like can control the functions of the home electric appliance 5.

If the HG 4 and the home electric appliance 5a can communication with each other but are not authenticated using the PIN codes, the authentication system 7 according to this embodiment supports the authentication with the PIN codes. Therefore, after the authentication according to this embodiment, the user terminal 3 or the like can control the functions of the home electric appliance 5a.

In this embodiment, an information processing apparatus such as a computer supports the authentication with the PIN codes by comparing operation content of the home electric appliance 5 instructed by the user and operation input to the home electric appliance 5. In particular, in the following explanation of the first embodiment, an information processing apparatus that supports authentication is the authentication supporting server 1.

### Authentication supporting server

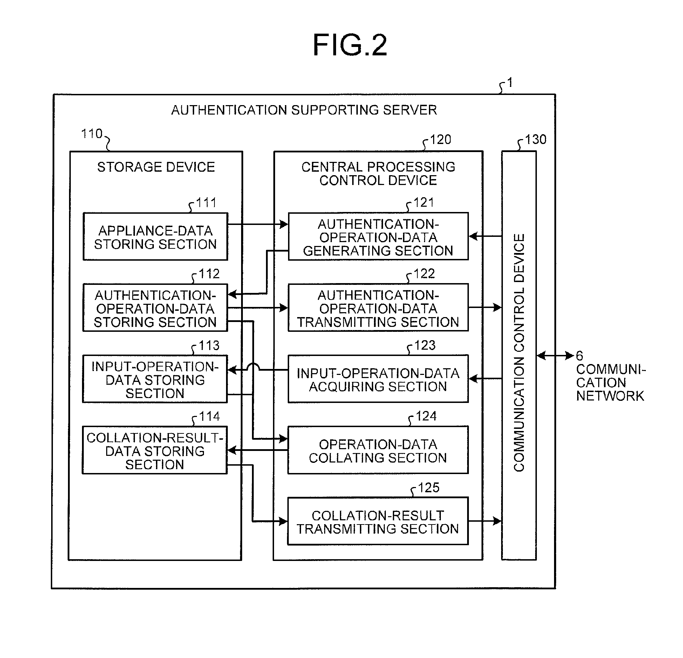

The authentication supporting server 1 according to this embodiment is realized by installing an authentication support program in a general computer including a storage device 110, a central processing control device 120, and a communication control device 130 as shown in FIG. 2. The communication control device 130 is connected to the domestic system 2 to be capable of communicating with each other via the communication network 6.

The storage device 110 is a hard disk, a RAM, or the like. The storage device 110 stores data referred to or updated by the central processing control device 120. The storage device 110 includes an appliance-data storing section 111, an authentication-operation-data storing section 112, an input-operation-data storing section 113, and a collation-result-data storing section 114. In the following explanation, the appliance-data storing section 111, the authentication-operation-data storing section 112, the input-operation-data storing section 113, and the collation-result-data storing section 114 are sometimes respectively simply referred to as "storing section 111", "storing section 112", "storing section 113", and "storing section 114".

The storing section 111 is a storage area in which appliance data 111a is stored in the storage device 110. The appliance data 111a is data in which types of home electric appliances and types of inputs that can be input to the home electric appliances are associated with each other. The home electric appliances stored in the appliance data 111a are home electric appliances that are authenticated by the authentication supporting server 1 according to this embodiment. The types of signals that can be input are different depending on home electric appliances. In the appliance data 111a, for each of the types of the home electric appliances, a type of an input that can be input from a main body or a remote controller of the hole electric appliance is associated. The appliance data 111a retains the type of the home electric appliance and plural input types in association with each other.

For example, if the home electric appliance is an air conditioner, a "temperature rise button", a "humidify button", and the like are provided in a remote controller. If the home electric appliance is a washing machine, a "selection start button", a "water volume button", and the like are provided in the washing machine. Therefore, in the appliance data 111a, for each of the types of the home electric appliances, input types corresponding to button types provided in the home electric appliances are associated.

The storing section 112 is a storage area in which authentication operation data 112a is stored in the storage device 110. The authentication operation data 112a is stored in the storing section 112 from the appliance data 111a by an authentication-operation-data generating section 121. The authentication operation data 112a is data of arbitrary one input type associated with a predetermined appliance in the appliance data 111a. The authentication operation data 112a may be data of a combination of arbitrary input types.

The storing section 113 is a storage area in which input operation data 113a is stored in the storage device 110. The input operation data 113a is stored in the storing section 113 by an input-operation-data acquiring section 123. The input operation data 113a is data operated and input by the user with reference to the authentication operation data 112a.

The storing section 114 is a storage area in which collation result data 114a is stored in the storage device 110. The collation result data 114a is data indicating whether the authentication operation data 112a and the input operation data 113a coincide with each other. The collation result data 114a is stored in the storing section 114 by an operation-data collating section 124.

The central processing control device 120 processes data stored in the storage device 110. The central processing control device 120 includes the authentication-operation-data generating section 121, an authentication-operation-data transmitting section 122, the input-operation-data acquiring section 123, the operation-data collating section 124, and a collation-result transmitting section 125. In the following explanation, the authentication-operation-data generating section 121, the authentication-operation-data transmitting section 122, the input-operation-data acquiring section 123, the operation-data collating section 124, and the collation-result transmitting section 125 are sometimes respectively simply referred to as "generating section 121", "operation-data transmitting section 122", "acquiring section 123", "collating section 124", and "result transmitting section 125".

When a type of an authentication target appliance is input from the HG 4 via the communication network 6, the generating section 121 generates the authentication operation data 112a from an input type associated with the type of the target appliance in the appliance data 111a and causes the storage device 110 to store the authentication operation data 112a. When the generating section 121 acquires the type of the authentication target appliance, the generating section 121 reads out the appliance data 111a from the storage device 110 and acquires an arbitrary input type corresponding to the acquired type of the appliance. Further, the generating section 121 causes the storing section 112 to store the acquired input type as the authentication operation data 112a. At this point, the generating section 121 may combine plural arbitrary input types and generate the authentication operation data 112a including the plural input types.

The operation-data transmitting section 122 transmits the authentication operation data 112a to the HG 4. The authentication operation data 112a transmitted to the HG 4 is displayed to the user. The user operates a main body or a remote controller of the authentication target home electric appliance while looking at the authentication operation data 112a.

The acquiring section 123 receives, from the HG 4, the input operation data 113a input from an input device of the authentication target home electric appliance and causes the storage device 110 to store the input operation data 113a. The input operation data 113a is data acquired by the user operating the main body or the remote controller of the authentication target home electric appliance while looking at the authentication operation data 112a. The HG 4 acquires the input operation data 113a from the authentication target home electric appliance and transmits the input operation data 113a to the authentication supporting server 1. The acquiring section 123 of the authentication supporting server 1 causes the storage device 110 to store the input operation data 113a received from the HG 4.

The collating section 124 compares the authentication operation data 112a and the input operation data 113a, determines whether the authentication operation data 112a and the input operation data 113a coincide with each other, and outputs collation result data 115a. The collating section 124 reads out the authentication operation data 112a and the input operation data 113a from the storage device 110 and compares the authentication operation data 112a and the input operation data 113a. The collating section 124 specifies, as the collation result data 115a, a collation result indicating whether the authentication operation data 112a and the input operation data 113a coincide with each other.

If plural input types are included in the authentication operation data 112a, operation data corresponding to all the input types may be included in the input operation data 113a or operation data corresponding to only one of the input types may be included in the input operation data 113a. If all the operation data corresponding to the authentication operation data 112a are included in the input operation data 113a, the collating section 124 specifies, as the collation result data 114a, a result concerning whether all the data coincide with authentication operation data 112a. On the other hand, if the input types are included one by one in each of the input operation data 113a, the collating section 124 collates the input types one by one in order of the input types included in the authentication operation data 112a and specifies, as the collation result data 114a, a result concerning whether the authentication operation data 112a and the input operation data 113a coincide with each other.

The result transmitting section 125 transmits the collation result data 114a to the HG 4. The HG 4 determines on the basis of the received collation result data whether the authentication target home electric appliance is authenticated.

### Domestic system

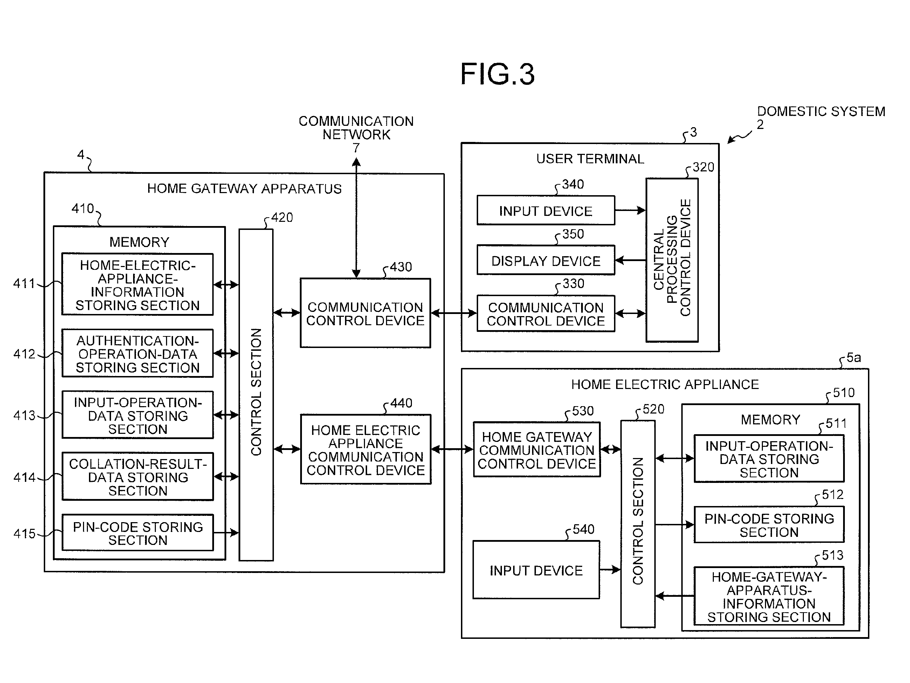

The domestic system 2 is explained with reference to FIG. 3. The domestic system 2 includes the user terminal 3, the HG 4, and the home electric appliance 5a. The HG 4 and the user terminal 3 are connected by, for example, a wired network. The HG 4 and the home electric appliance 5a are connected by a wireless network. The HG 4 and the home electric appliance 5a can communicate with each other in a state in which the HG 4 and the home electric appliance 5a are not authenticated. However, the HG 4 and the home electric appliance 5a can transmit and receive home electric appliance control data only in a state in which the HG 4 and the home electric appliance 5a are authenticated. The home electric appliance control data is data transmitted and received between the HG 4 and the home electric appliance 5a in order to transmit an instruction to the home electric appliance 5a and acquire a state of the home electric appliance 5a.

The user terminal 3 is a general computer. The user terminal 3 includes a central processing control device 320, a communication control device 330, an input device 340, and a display device 350. The communication control device 330 is connected to the HG 4. In the first embodiment, the user terminal 3 functions as an input device and a display device of the HG 4. According to an instruction from the HG 4, the user terminal 3 displays data on the display device 350 and inputs data input from the input device 340 to the HG 4.

The HG 4 is a control device that controls the home electric appliance 5a of the domestic system 2. The HG 4 includes a memory 410, a control section 420, a communication control device 430, and a home electric appliance communication control device 440. The communication control device 430 is connected to the user terminal 3 and connected to the authentication supporting server 1 via the communication network 6. The home electric appliance communication control device 440 is connected to the home electric appliance 5a.

The memory 410 includes a home-electric-appliance-information storing section 411, an authentication-operation-data storing section 412, an input-operation-data storing section 413, a collation-result-data storing section 414, and a PIN-code storing section 415. In the following explanation, the home-electric-appliance-information storing section 411, the authentication-operation-data storing section 412, the input-operation-data storing section 413, the collation-result-data storing section 414, and the PIN-code storing section 415 are sometimes respectively simply referred to as "storing section 411", "storing section 412", "storing section 413", "storing section 414", and "storing section 415".

The storing section 411 is a storage area in which home electric appliance information data 411a is stored in the memory 410. The home electric appliance information data 411a is data of the home electric appliance 5 to be controlled by the HG 4. The data of the home electric appliance 5 included in the home electric appliance information data 411a includes a type of the home electric appliance 5 and an identifier, a PIN code, an IP address, and an ECHONET address of the home electric appliance 5. The PIN code of the home electric appliance 5 is transmitted from the home electric appliance 5 to the HG 4 and stored in the HG 4 if the authentication supporting server 1 determines that the collation result data 114a indicates that the authentication operation data 112a and the input operation data 113a coincide with each other.

The storing section 412 is a storage area in which authentication operation data 412a is stored in the memory 410. The authentication operation data 412a is data generated by the authentication supporting server 1 on the basis of the type of the authentication target appliance and transmitted. The authentication operation data 412a is transmitted to the user terminal 3 and displayed on the display device 350 of the user terminal 3. The user operates an input device 540 of the home electric appliance 5a according to display content of the display device 350.

The storing section 413 is a storage area in which input operation data 413a is stored in the memory 410. The input operation data 413a is data obtained by the user operating the input device 540 of the home electric appliance 5a according to authentication operation data. The input operation data 413a is acquired from the home electric appliance 5a. The input operation data 413a is transmitted to the authentication supporting server 1 and used for collation with the authentication operation data.

The storing section 414 is a storage area in which collation result data 414a is stored in the memory 410. The collation result data 414a is data of a collation result indicating whether the authentication operation data 412a and the input operation data 413a coincide with each other, and is input from the authentication supporting server 1. The collation result data 414a is transmitted to the user terminal 3 and displayed on the display device 350 of the user terminal 3. If the collation result data 414a indicates that the authentication operation data 412a and the input operation data 413a coincide with each other, the HG 4 causes the control section 420 to exchange the PIN codes of the home electric appliance 5a and the HG 4.

The storing section 415 is a storage area in which a PIN code 415a is stored in the memory 410. The PIN code 415a is the PIN code of the HG 4. If the collation result data 414a indicates that the authentication operation data 412a and the input operation data 413a coincide with each other, the PIN code 415a is transmitted to the home electric appliance 5a.

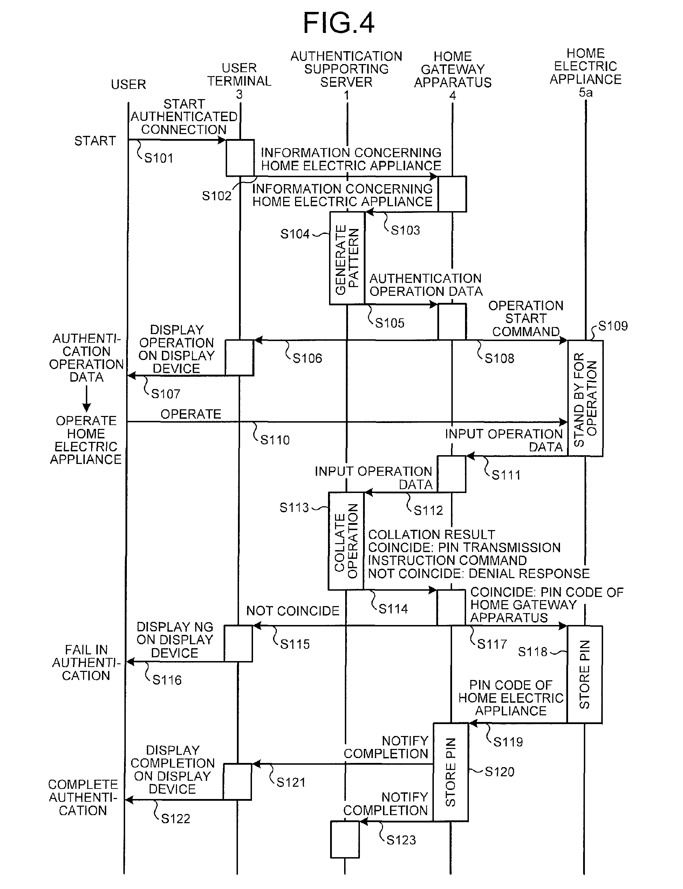

The control section 420 controls communication with the authentication supporting server 1, the user terminal 3, and the home electric appliance 5a and refers to or updates the data stored in the memory 410. Processing of the control section 420 is explained in detail below with reference to FIG. 4.

The home electric appliance 5a includes a memory 510, a control section 520, a home gateway communication control device 530, and the input device 540. The home gateway communication control device 530 is connected to the HG 4.

The input device 540 is input means such as a button for inputting an instruction to the home electric appliance 5a. The input device 540 may be fixed to the home electric appliance 5a or may be connected to the home electric appliance 5a by wired communication or near field wireless communication. A near field wireless communication network is, for example, Wi-Fi communication, Bluetooth, or infrared communication. The input device 540 of the home electric appliance 5a is limited in this way, whereby a problem can be prevented in which, for example, an appliance is accidentally authenticated by operation by an outsider present outdoor.

The memory 510 includes an input-operation-data storing section 511, a PIN-code storing section 512, and a home-gateway-device-data storing section 513. In the following explanation, the input-operation-data storing section 511, the PIN-code storing section 512, and the home-gateway-device-data storing section 513 are sometimes respectively simply referred to as "storing section 511", "storing section 512", and "storing section 513".

The storing section 511 is a storage area in which input operation data 511a is stored in the memory 510. The input operation data 511a is data obtained by the user operating the input device 540 while referring to the display device 350 of the user terminal 3. The input operation data 511a is transmitted to the authentication supporting server 1 via the HG 4.

The storing section 512 is a storage area in which a PIN code 512a is stored in the memory 510. The PIN code 512a is a PIN code of the home electric appliance 5a. If collation result data indicates that the input operation data 511a and the PIN code 512a coincide with each other, the PIN code 512a is transmitted to the HG 4.

The storing section 513 is a storage area in which home gateway apparatus data 513a is stored in the memory 510. The home gateway apparatus data 513a is data referred to by the home electric appliance 5a in order to communicate with the HG 4. The home gateway apparatus data 513a includes a type of the HG 4 and an identifier, a PIN code, an IP address, and an ECHONET address of the HG 4.

The control section 520 controls communication with the HG 4 and refers to or updates the data stored in the memory 510. Processing of the control section 520 is explained in detail below with reference to FIG. 4.

### Authentication method

An authentication method according to the first embodiment is explained with reference to FIG. 4. In an example shown in FIG. 4, the home electric appliance 5a is an authentication target appliance. It is assumed that the authentication target home electric appliance 5a and the HG 4 are already connected by wireless communication without authentication.

First, in step S101, the user inputs to the user terminal 3 an instruction to start authenticated connection for the home electric appliance 5a connected to the domestic system 2 anew. The authentication supporting server 1 may display a list of home electric appliances on a browser or the like of the user terminal 3. The user may select information concerning the home electric appliance 5a from the list of home electric appliances to thereby input the instruction to start the authenticated connection.

In step S102, when the user terminal 3 acquires information concerning the home electric appliance 5a connected anew, the user terminal 3 inputs the information concerning the home electric appliance 5a to the HG 4. The user terminal 3 transmits a type of the home electric appliance 5a to the HG 4 as the information concerning the home electric appliance 5a. When the HG 4 acquires the type of the home electric appliance 5a, the HG 4 stores the type of the home electric appliance 5a registered anew in the home electric appliance information data 411a of the HG 4.

In step S103, the HG 4 transmits the type of the target appliance to the authentication supporting server 1 as the information concerning the target appliance. In step S104, when the authentication supporting server 1 acquires the type of the target appliance, the authentication server 1 acquires, from the appliance data 111a, a type of a signal that can be input to the target appliance and generates the authentication operation data 112a, which becomes an authentication pattern. In step S105, the authentication supporting server 1 transmits the generated authentication operation data 112a to the HG 4.

When the HG 4 receives the authentication operation data 412a from the authentication supporting server 1, the HG 4 stores the received authentication operation data 412a in the storage device 410. Further, in step S106, the HG 4 transmits the authentication operation data 412a to the user terminal 3. In step S108, the HG 4 transmits an operation start command to the home electric appliance 5a.

When the home electric appliance 5a receives the operation start command, the home electric appliance 5a stands by for operation from the input device 540 of the home electric appliance 5a. Operation input during this operation standby is determined as input data based on the authentication operation data rather than as operation for the functions of the home electric appliance 5a. For example, even if the "temperature rise" button is pressed, the home electric appliance 5a grasps only that the "temperature rise" button is operated without performing operation indicated by the "temperature rise" button.

When the user terminal 3 receives the authentication operation data in step S106, in step S107, the user terminal 3 displays the authentication operation data on the display device 350. In step S110, the user operates the input device 540 of the home electric appliance 5a while viewing the display device 350. When the input device 540 is operated, in step S111, the home electric appliance 5a transmits the input operation data 413a of the operation to the HG 4. In step S112, the HG 4 transmits the received input operation data 413a to the authentication supporting server 1.

The authentication supporting server 1 stores the received input operation data 113a in the storage device 110. In step S113, the authentication supporting server 1 collates the authentication operation data 112a and the input operation data 113a and generates the collation result data 114a indicating whether the authentication operation data 112a and the input operation data 113a coincide with each other. In step S114, the authentication supporting server 1 transmits the collation result data 114a to the HG 4.

When the HG 4 receives the collation result data 114a, the HG 4 divides processing according to content of the collation result data 114a. If the collation result data 114a indicates that the authentication operation data 112a and the input operation data 113a do not coincide with each other, in step S115, the HG 4 notifies the user terminal 3 to that effect. In step S116, the user terminal 3 displays failure of the authentication on the display device 350.

On the other hand, if the collation result data 114a indicates that the authentication operation data 112a and the input operation data 113a coincide with each other, in step S117, the HG 4 transmits the PIN code 415a of the HG 4 to the home electric appliance 5a. In step S118, the home electric appliance 5a stores the received PIN code in the memory 510 as the home gateway apparatus data 513a. Further, the home electric appliance 5a reads out the PIN code 512a of the home electric appliance 5a from the memory 510. In step S119, the home electric appliance 5a transmits the PIN code 512a to the HG 4.

In step S120, the HG 4 stores the PIN code 512a of the home electric appliance 5a in the home electric appliance information data 411a. In step S121, the HG 4 notifies the user terminal 3 that the authentication is completed. In step S123, the HG 4 notifies the authentication supporting server 1 that the authentication is completed.

When the user terminal 3 is notified that the authentication is completed, in step S122, the user terminal 3 displays a message to that effect on the display device 350 and notifies the user to that effect.

As explained above, in the authentication system according to the first embodiment, if the user can perform operation as specified by the authentication operation data generated from the home electric appliance information, the PIN codes of the home electric appliance and the home gateway apparatus are exchanged and authenticated connection is established. Since the user can perform operation as specified by the authentication operation data in this way, assuming that information that is necessary for authentication processing for communication and only the user can learn is input to the home electric appliance 5a, it is possible to complete the authentication processing without using a password such as a PIN code. Since the authentication supporting server 1 supports the authentication processing of plural domestic systems in this way, it is possible to reduce operation costs of the authentication system 7 as a whole.

When the user operates a home electric appliance in the authentication system according to the first embodiment, the user uses an input device connected to the home electric appliance by wired communication or near field wireless communication. Therefore, the authentication system can receive only operation by users limited to a purchaser of the home electric appliance, family members of the purchaser, and the like. Consequently, it is possible to prevent wrong authentication due to accidental input operation by an outsider.

### Second Embodiment

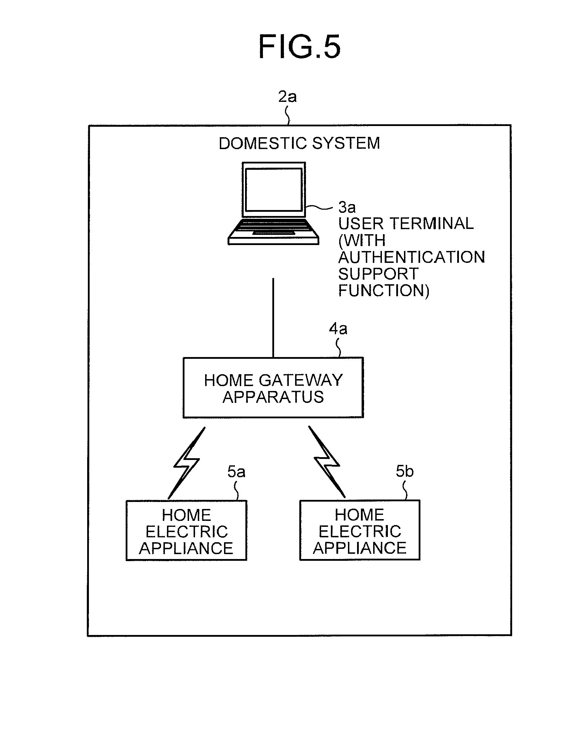

In the following explanation in a second embodiment, as shown in FIG. 5, an information processing apparatus that supports connection authentication between an HG 4a and the home electric appliance 5a is a user terminal 3a. The user terminal 3a is different from the user terminal 3 in the first embodiment in that the user terminal 3a includes an authentication support function. The user terminal 3a according to the second embodiment is realized by installing an authentication support program in a general computer.

The user terminal 3a according to the second embodiment includes a storage device 310, the central processing control device 320, the communication control device 330, the input device 340, and the display device 350. The central processing control device 320, the communication control device 330, the input device 340, and the display device 350 of the user terminal 3a are the same as the respective devices of the user terminal 3 according to the first embodiment explained with reference to FIG. 3.

The storage device 310 is a hard disk, a RAM, or the like. The storage device 310 stores data referred to or updated by the central processing control device 320. The storage device 310 includes an appliance-data storing section 311, an authentication-operation-data storing section 312, an input-operation-data storing section 313, and a collation-result-data storing section 314. In the following explanation, the appliance-data storing section 311, the authentication-operation-data storing section 312, the input-operation-data storing section 313, and the collation-result-data storing section 314 are sometimes respectively simply referred to as "storing section 311", "storing section 312", "storing section 313", and "storing section 314".

In the storing section 311, the storing section 312, the storing section 313, and the storing section 314, appliance data 311a, authentication operation data 312a, input operation data 313a, and collation result data 314a are respectively stored. The appliance data 311a, the authentication operation data 312a, the input operation data 313a, and the collation result data 314a are respectively the same as the appliance data 111a, the authentication operation data 112a, the input operation data 113a, and the collation result data 114a stored in the authentication supporting server 1 according to the

### first embodiment.

The central processing control device 320 includes a target-appliance specifying section 321, an authentication-operation-data generating section 322, an input-operation-data acquiring section 323, an operation-data collating section 324, and a collation-result output section 325. In the following explanation, the target-appliance specifying section 321, the authentication-operation-data generating section 322, the input-operation-data acquiring section 323, the operation-data collating section 324, and the collation-result output section 325 are sometimes respectively simply referred to as "specifying section 321", "generating section 322", "acquiring section 323", "collating section 324", and "result output section 325".

The specifying section 321 displays a type of an appliance on the basis of the appliance data 311a. When a type of a target appliance is selected, the specifying section 321 transmits the type of the target appliance to the HG 4a. The specifying section 321 reads out, for example, the appliance data 311a, displays a list of appliance types on the display device 350, and specifies, as an authentication target appliance, an appliance selected by a user. The specifying section 321 transmits an appliance type of the home electric appliance 5a specified by the specifying section 321 to the HG 4a.

The generating section 322 generates the authentication operation data 312a from an input type associated with the type of the target appliance in the appliance data 311a and causes the storage device 310 to store the authentication operation data 312a. When the generating section 322 acquires the type of the authentication target home electric appliance 5a, the generating section 322 reads out the appliance data 311a from the storage device 310 and acquires an arbitrary input type corresponding to the acquired type of the home electric appliance 5a. Further, the generating section 322 causes the storing section 312 to store the acquired input type as the authentication operation data 312a. At this point, the authentication-operation-data generating section 321 may combine plural arbitrary input types and generate the authentication operation data 312a including the input types.

The generating section 322 displays the generated authentication operation data 312a on the display device 350.

The acquiring section 323 receives, from the HG 4a, input operation data input from an input device of the authentication target appliance and causes the storage device 310 to store the input operation data. This input operation data 313a is data acquired by the user operating a main body or a remote controller of the authentication target home electric appliance 5a while looking at the authentication operation data displayed on the display device 350. The HG 4a acquires the input operation data from the authentication target home electric appliance 5a and transmits the input operation data to the user terminal 3a. The acquiring section 323 of the user terminal 3a causes the storage device 310 to store the received input operation data 313a.

The collating section 324 compares the authentication operation data 312a and the input operation data 313a, determines whether the authentication operation data 312a and the input operation data 313a coincide with each other, and outputs the collation result data 314a. The collating section 324 compares the authentication operation data 312a and the input operation data 313a read out from the storage device 310 and specifies, as the collation result data 314a, a collation results concerning whether the authentication operation data 312a and the input operation data 313a coincide with each other.

The result output section 325 outputs the collation result data 314a. As a result of the collation, if the authentication operation data 312a and the input operation data 313a do not coincide with each other, the result output section 325 displays a message to that effect on the display device 350. On the other hand, if the authentication operation data 312a and the input operation data 313a coincide with each other, the result output section 325 transmits a message to that effect to the HG 4a. Thereafter, the HG 4a exchanges the PIN codes with the home electric appliance 5a.

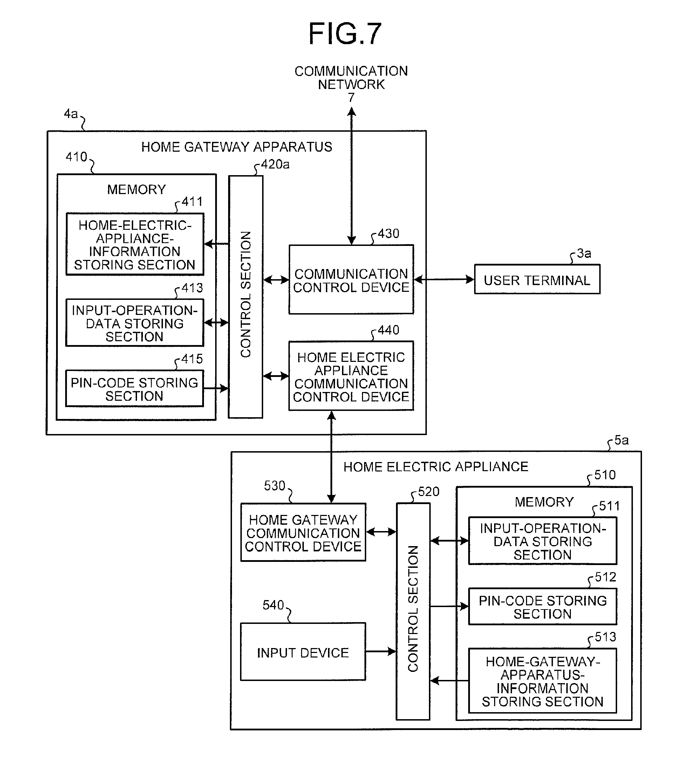

The HG 4a according to the second embodiment is explained with reference to FIG. 7. The home electric appliance 5a includes a configuration same as the configuration in the first embodiment.

The HG 4a according to the second embodiment is different from the HG 4 according to the first embodiment explained with reference to FIG. 3 in that the HG 4a does not include the storing section 412 and the storing section 414. The storing sections 411, 413, and 415 included in the HG 4a according to the second embodiment are the same as the sections of the HG 4 according to the first embodiment explained with reference to FIG. 3.

### Authentication method

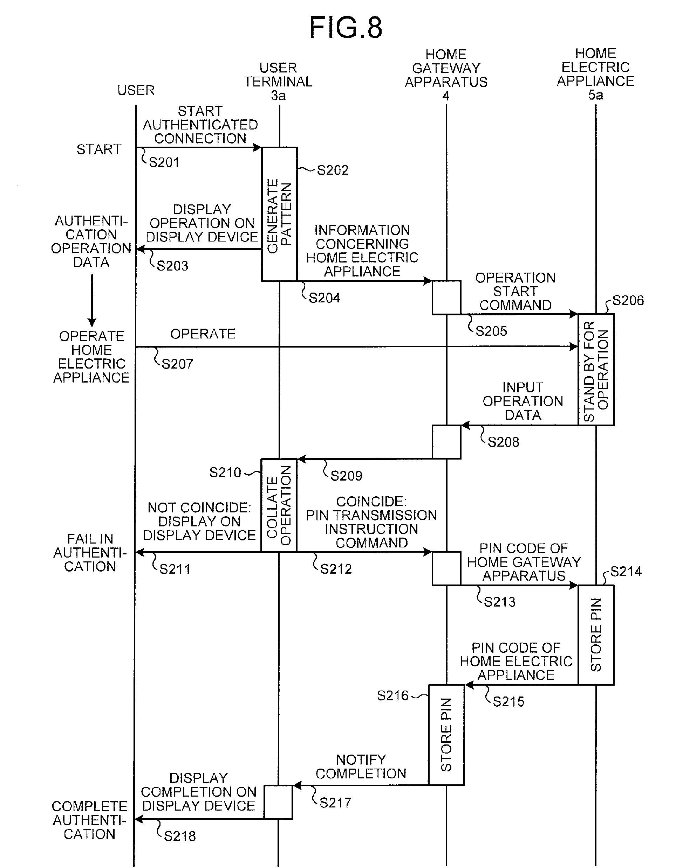

An authentication method according to the second embodiment is explained with reference to FIG. 8. In an example shown in FIG. 8, the home electric appliance 5a is an authentication target appliance. The home electric appliance 5a and the home gateway apparatus (HG) 4a are already connected by wireless communication without authentication.

First, in step S201, the user inputs an instruction to start authenticated connection for the home electric appliance 5a connected to the domestic system 2 anew. The user terminal 3a may display a list of home electric appliances on a browser or the like. The user may select information concerning the home electric appliance 5a from the list of home electric appliances to thereby input the instruction to start the authenticated connection.

In step S202, when the user terminal 3a acquires a type of the home electric appliance 5a connected anew, the user terminal 3a acquires, from the appliance data 311a, a type of a signal that can be input to the target appliance and generates the authentication operation data 312a. In step S203, the user terminal 3a displays the generated authentication operation data 312a on the display device 350.

On the other hand, in step S204, the user terminal 3a inputs information concerning the authentication target home electric appliance 5a to the HG 4a. In step S205, the HG 4a transmits an operation start command to the authentication target home electric appliance 5a. When the home electric appliance 5a receives the operation start command, in step S206, the home electric appliance 5a stands by for operation from the input device 540 of the home electric appliance 5a. Operation input during the operation standby is determined as input data based on authentication operation data rather than as operation for the home electric appliance 5a. For example, even if the "temperature rise" button is pressed, the home electric appliance 5a grasps only that the "temperature rise" button is operated without performing operation indicated by the "temperature rise" button.

In step S207, the user operates the input device 540 while viewing the display device 350 of the user terminal 3a. When input operation data is input to the input device 340, in step S208, the home electric appliance 5a transmits the input operation data to the HG 4a. In step S209, the HG 4a transmits the received input operation data 413a to the user terminal 3a.

The user terminal 3a stores the received input operation data 313a in the storage device 310. In step S210, the user terminal 3a collates the authentication operation data 312a and the input operation data 313a and generates the collation result data 314a. If the collation result data 314a indicates that the authentication operation data 312a and the input operation data 313a do not coincide with each other, in step S211, the user terminal 3a displays a message to that effect on the display device 350. On the other hand, if the collation result data 314a indicates that the authentication operation data 312a and the input operation data 313a coincide with each other, in step S212, the user terminal 3a transmits, to the HG 4a, an instruction to transmit the PIN data 415a of the HG 4a to the home electric appliance 5a.

In step S213, the HG 4a transmits the PIN code 415a of the HG 4a to the home electric appliance 5a. In step S214, the home electric appliance 5a stores the received PIN code 415a in the memory 510 as the home gateway apparatus data 513a. The home electric appliance 5a reads out the PIN code 512a of the home electric appliance 5a from the memory 510. In step S215, the home electric appliance 5a transmits the PIN code 512a to the HG 4a.

In step S216, the HG 4a stores the PIN code 512a of the home electric appliance 5a in the home electronic appliance information data 411a. In step S217, the HG 4a notifies the user terminal 3a that the authentication is completed.

When the user terminal 3a is notified that the authentication is completed, in step S218, the user terminal 3a displays a message to that effect on the display device 350 and notifies the user to that effect.

As explained above, in the second embodiment, it is possible to perform authentication in the same manner as the first embodiment by installing the same computer program in the user terminal without introducing the authentication supporting server.

### Third Embodiment

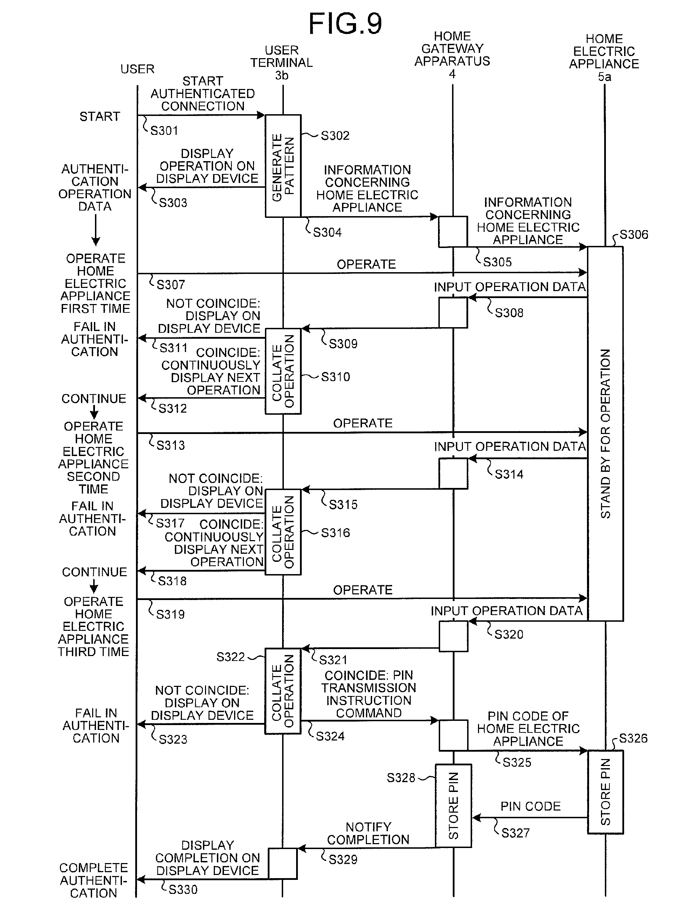

In the following explanation in a third embodiment, the authentication operation data in the second embodiment is a combination of plural input types. The user terminal 3a according to the third embodiment selects plural arbitrary input types from the appliance data 311a and generates the authentication operation data 312a. In an authentication method according to the third embodiment shown in FIG. 9, the authentication operation data 312a is three input types.

Processing from step S301 to step S309 is the same as the processing in step S201 to step S209 of the authentication method according to the second embodiment explained with reference to FIG. 8.

In the third embodiment, in step S310, the user terminal 3a compares a first input type of the authentication operation data 312a and the input operation data 313a acquired in step S309 and determines whether the input type and the input operation data 313a coincide with each other. If the input type and the input operation data 313a do not coincide with each other, in step S311, the user terminal 3a displays a message to that effect on the display device 350. On the other hand, if the input type and the input operation data 313a coincide with each other, in step S312, the user terminal 3a displays, on the display device 350, an instruction to input the next input type of the authentication operation data 312a.

In the third embodiment, the operation by a user and the authentication in step S307 to step S311 are repeated by the number of input types included in the authentication operation data 312a.

As explained above, the plural input types are included in the authentication operation data 312a. Consequently, it is possible to improve authentication security.

### Fourth Embodiment

In the explanation in the first to third embodiments, operation input to the home electric appliance 5 is displayed, the user is caused to operate the home electric appliance 5, the displayed operation and the input operation are compared, and the authentication target home electric appliance 5 is authenticated. On the other hand, in the following explanation in fourth to sixth embodiments, operation for consuming electric power of the home electric appliance 5 is displayed, a user is caused to operate the home electric appliance 5, the input operation and the power consumption of the home electric appliance 5 are compared, and the home electric appliance 5 is authenticated.

In the fourth embodiment, an information processing apparatus such as a computer supports authentication with PIN codes by comparing timing of the operation of the home electric appliance 5b by user operation and the transition of the power consumption of the home electric appliance 5b caused by the operation of the home electric appliance 5b. In particular, in the fourth embodiment, the information processing apparatus that supports authentication is an authentication supporting server 1b.

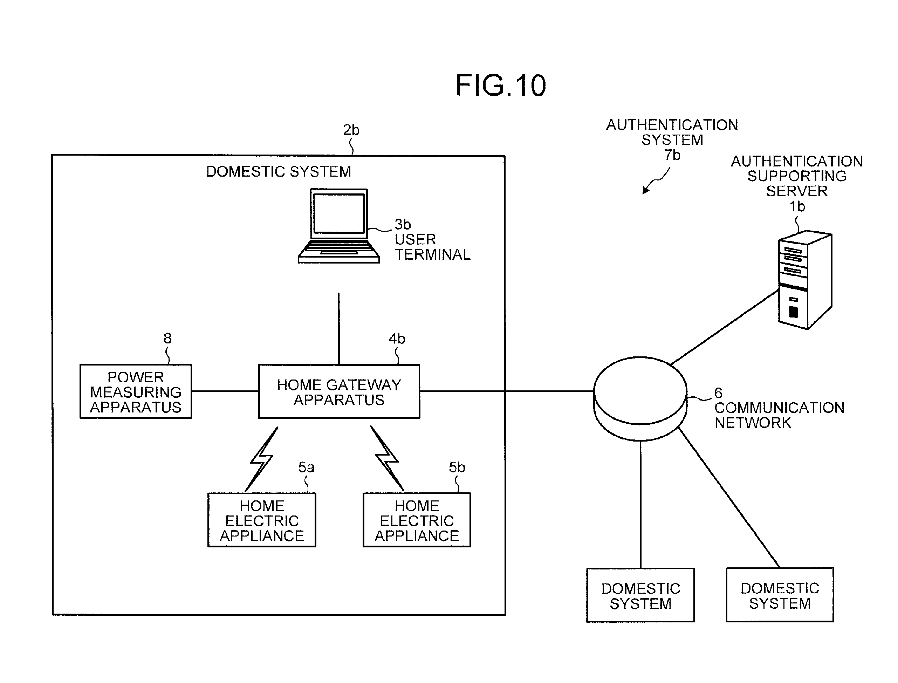

An authentication system 7b according to the fourth embodiment shown in FIG. 10 is different from the authentication system 7 according to the first embodiment shown in FIG. 1 in that a domestic system 2b includes a power measuring apparatus 8. The configurations of the authentication supporting server 1b, a user terminal 3b, and an HG 4b are different from those in the first embodiment.

### Authentication supporting server

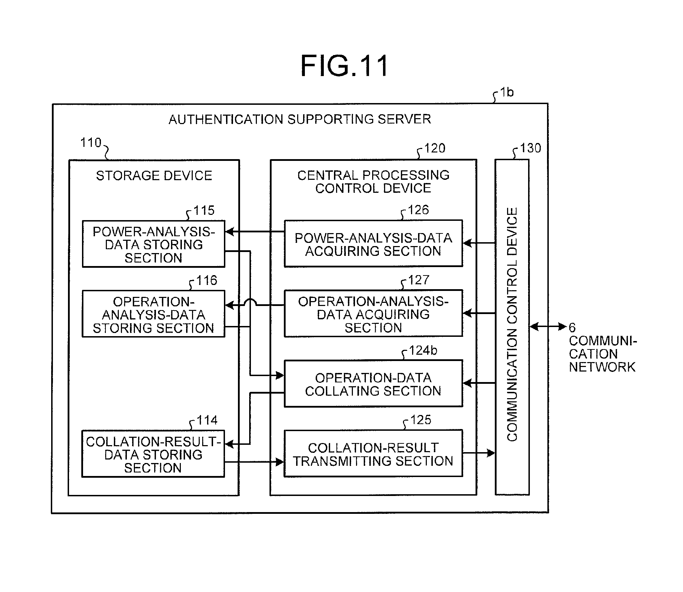

The authentication supporting server 1b according to the fourth embodiment is explained with reference to FIG. 11. The storage device 110 of the authentication supporting server 1b according to the fourth embodiment includes a power-analysis-data storing section 115, an operation-analysis-data storing section 116, and a collation-result-data storing section 114. The central processing control device 120 of the authentication supporting server 1b includes a power-analysis-data acquiring section 126, an operation-analysis-data acquiring section 127, an operation-data collating section 124b, and a collation-result transmitting section 125. In the following explanation, the power-analysis-data storing section 115, the operation-analysis-data storing section 116, and the collation-result-data storing section 114 are sometimes respective simply referred to as "storing section 115", "storing section 116", and "storing section 114". The power-analysis-data acquiring section 126, the operation-analysis-data acquiring section 127, the operation-data collating section 124b, and the collation-result transmitting section 125 are sometimes respectively simply referred to as "acquiring section 126", "acquiring section 127", "collating section 124b", and "result transmitting section 125".

The storing section 115 is a storage area in which power analysis data 115a is stored in the storage device 110. The power analysis data 115a is data concerning time of the operation of the home electric appliance 5b analyzed from the power consumption of a target appliance measured by the power measuring apparatus 8. The power analysis data 115a is data such as timing when the power consumption of the home electric appliance 5b rises according to the operation of the authentication target home electric appliance 5b by the user, timing when the power consumption returns to standby power, and time in which the increase in the power consumption continues. The power analysis data 115a is acquired from the HG 4b. The power analysis data 115a is stored in the storing section 115 by the acquiring section 126.

The power analysis data 115a is data for estimating, from the viewpoint of power consumption, timing of the operation of the home electric appliance 5b by user operation. Therefore, the timing when the power consumption of the home electric appliance 5b increases corresponds to an operation start time when the user operates the home electric appliance 5b and the home electric appliance 5b operates. The timing when the power consumption returns to the standby power corresponds to an operation end time when the home electric appliance 5b operating according to the user operation stops the operation. The time in which the increase in the power consumption continues corresponds to an operating time in which the home electric appliance 5b operates according to the user operation.

As another embodiment, it is also conceivable that the authentication supporting server 1b generates the power analysis data 115a. The authentication supporting server 1b may acquire, from the power measuring apparatus 8, power measurement data concerning the elapse of time of the power consumption of the authentication target home electric appliance 5b. The authentication supporting server 1b generates the power analysis data 115a from the acquired power measurement data and stores the power analysis data 115a in the storing section 115.

The storing section 116 is a storage area in which operation analysis data 116a is stored in the storage device 110. The operation analysis data 116a is data concerning time in which the home electric appliance 5b operates according to user operation. The operation analysis data 116a is data such as an operation start time when the user operates the authentication target home electric appliance 5b, an operation end time when the operation of the home electric appliance 5b is ended, and an operating time in which the home electric appliance 5b operates. The operation analysis data 116a is acquired from the authentication target home electric appliance 5b. The operation analysis data 116a is stored by the acquiring section 127. The operation analysis data 116a is data obtained by acquiring, from the home electric appliance 5b, timing of the operation of the home electric appliance 5b by user operation.

The storing section 114 is a storage area in which the collation result data 114a is stored in the storage device 110. The collation result data 114a is data indicating whether the power analysis data 115a and the operation analysis data 116a coincide with each other. The collation result data 114a is generated and stored by the collating section 124b.

The acquiring section 126 acquires the power analysis data 115a transmitted from the power measuring apparatus 8 and stores the power analysis data 115a in the storing section 115. If power measurement data concerning the power consumption of the authentication target home electric appliance 5b is acquired from the power measuring apparatus 8, the acquiring section 126 generates the power analysis data 115a from the acquired power measurement data and stores the power analysis data 115a in the storing section 115.

The acquiring section 127 acquires the operation analysis data 116a from the home electric appliance 5b and stores the operation analysis data 116a in the storing section 116.

The collating section 124b compares the power analysis data 115a and the operation analysis data 116a, determines whether times of operation respectively indicated by the power analysis data 115a and the operation analysis data 116a coincide with each other, and outputs the collation result data 114a. The collating section 124b reads out the power analysis data 115a and the operation analysis data 116a from the storage device 110, determines whether operation start times, operation end times, operating times, and the like of the operation of the home electric appliance 5b by user operation respectively coincide with each other, and generates the collation result data 114a.

For example, the collating section 124b reads out the power analysis data 115a and acquires the operation start time, the operation end time, and the operating time and reads out the operation analysis data 116a and acquires the operation start time, the operation end time, and the operating time. The collating section 124b determines whether the operation start time of the power analysis data 115a and the operation start time of the operation analysis data 116a coincide with each other. The collating section 124b determines whether the operation end time of the power analysis data 115a and the operation end time of the operation analysis data 116a coincide with each other. The collating section 124b determines whether the operating time of the power analysis data 115a and the operating time of the operation analysis data 116a coincide with each other. The collating section 124b determines on the basis of plural results of the determination whether the power analysis data 115a and the operation analysis data 116a coincide with each other and generates the collation result data 114a.

The power analysis data 115a and the operation analysis data 116a do not have to coincide with each other in a strict sense. For example, if a difference between the operation start time indicated by the power analysis data 115a and the operation start time indicated by the operation analysis data 116a is within a predetermined time, the collating section 124b may determine that the operation start times coincide with each other.

The result transmitting section 125 transmits the collation result data 114a to the HG 4b. The HG 4b determines on the basis of the received collation result data 114a whether the authentication target home electric appliance 5b is authenticated.

### Domestic system

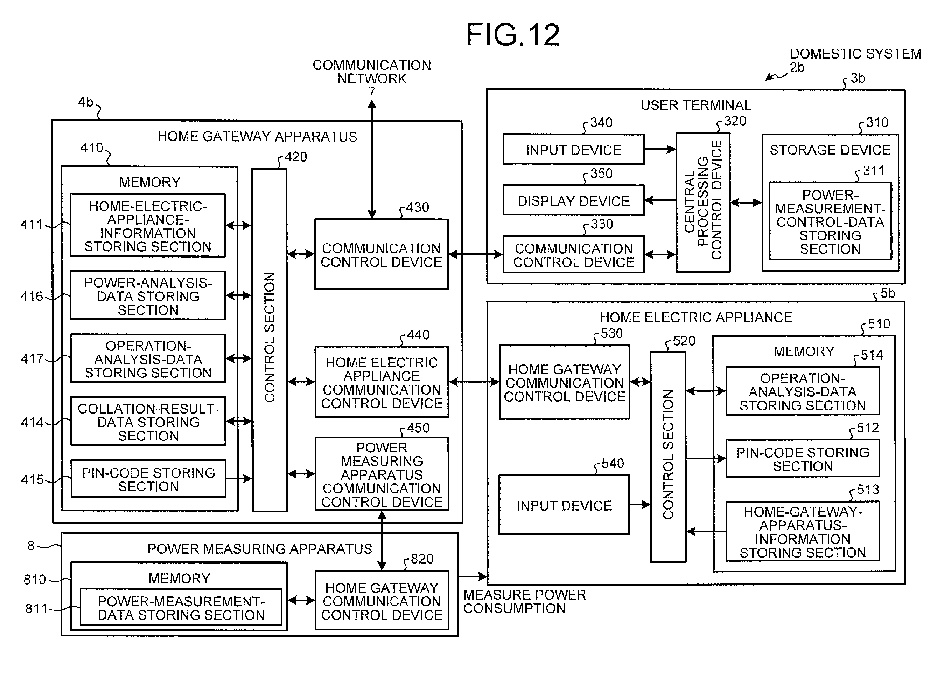

The domestic system 2b is explained with reference to FIG. 12. The domestic system 2b according to the fourth embodiment includes the user terminal 3b, the HG 4b, the home electric appliance 5b, and the power measuring apparatus 8. The HG 4b and the user terminal 3b are connected by, for example, a wired network. The HG 4b and the home electric appliance 5b are connected by a wireless network. The HG 4b and the home electric appliance 5b can communicate with each other in a state in which the HG 4b and the home electric appliance 5b are not authenticated. However, the home electric appliance 5b processes only a Get command. The home electric appliance 5b can process a Put command for home electric appliance control data or the like only in a state in which the home electric appliance 5b is authenticated. The HG 4b and the power measuring apparatus 8 are connected by wire or radio.

The user terminal 3b is a general computer. The user terminal 3b includes the storage device 310, the central processing control device 320, the communication control device 330, the input device 340, and the display device 350. The communication control device 330 is connected to the HG 4b.

In the fourth embodiment, the user terminal 3b functions as an input device and a display device of the HG 4b. The HG 4b displays data on the display device 350 and input data input from the input device 340 to the HG 4b according to an instruction from the HG 4b.

In the fourth embodiment, the storage device 310 of the user terminal 3b includes a power-measurement-control-data storing section 311. The power-measurement-control-data storing section 311 is a storage area in which power measurement control data 311a is stored in the storage device 310.

If the power measuring apparatus 8 includes plural measurement sensors, the power measurement control data 311a is data in which identifiers of the sensors and identifiers of home electric appliances to be measured by the sensors are associated with each other. The central processing control device 320 of the user terminal 3b displays the power measurement control data 311a from the storage device 310 and causes the user to select the authentication target home electric appliance 5b. The central processing control device 320 transmits, as information concerning the authentication target home electric appliance 5b, an identifier of the home electric appliance 5b selected by the user and an identifier of the sensor of the power measuring apparatus 8 connected to the home electric appliance 5, to the HG 4a.

The central processing control device 320 of the user terminal 3b displays the information on the basis of an instruction of the HG 4b. For example, when the home electric appliance 5b becomes capable of receiving operation and receives operation content for the home electric appliance 5b from the HG 4b, the central processing control device 320 displays the operation content for the authentication target home electric appliance 5b on the display device 350. The central processing control device 320 acquires and displays a result of operation for the home electric appliance 5b and displays a result concerning whether the home electric appliance 5b is authenticated.

The HG 4b is a control device that controls the home electric appliance 5b of the domestic system 2b. The HG 4b receives power measurement data from the power measuring apparatus 8 and generates power analysis data 416a. The HG 4b displays information on the user terminal 3b and acquires the operation of the user input to the user terminal 3b.

The HG 4b according to the fourth embodiment further includes a power measuring apparatus communication control device 450. The power measuring apparatus communication control device 450 is connected to the power measuring apparatus 8 by wire or radio.

The memory 410 of the HG 4b includes the home-electric-appliance-information storing section 411, a power-analysis-data storing section 416, an operation-analysis-data storing section 417, the collation-result-data storing section 414, and the PIN-code storing section 415. The home-electric-appliance storing section 411, the collation-result-data storing section 414, and the PIN-code storing section 415 are the same as those in the first embodiment. In the following explanation, the home-electric-appliance-information storing section 411, the power-analysis-data storing section 416, the operation-analysis-data storing section 417, the collation-result-data storing section 414, and the PIN-code storing section 415 are sometimes respectively simply referred to as "storing section 411", "storing section 416", "storing section 417", "storing section 414", and "storing section 415".

The storing section 416 is a storage area in which the power analysis data 416a is stored in the memory 410. The HG 4b generates the power analysis data 416a from power measurement data of the authentication target home electric appliance 5b received from the power measuring apparatus 8 and stores the power analysis data 416a in the storing section 416. The power analysis data 416a is transmitted to the authentication supporting server 1b.

The storing section 417 is a storage area in which operation analysis data 417a is stored in the memory 410. When the HG 4b receives the operation analysis data 417a from the power measuring apparatus 8, the HG 4b temporarily stores the operation analysis data 417a in the operation-analysis-data storing section 417 and transmits the operation analysis data 417a to the authentication supporting server 1b.

The control section 420 controls communication with the authentication supporting server 1b, the user terminal 3b, the home electric appliance 5b, and the power measuring apparatus 8 and refers to or updates the data stored in the memory 410. In particular, in the fourth embodiment, when the control section 420 receives power measurement data from the power measuring apparatus 8, the control section 420 generates the power analysis data 416a from the power measurement data.

If the collation result data 414a indicates that operations times respectively indicated by the power analysis data 416a and the operation analysis data 417a coincide with each other, the control section 420 authenticates communication for controlling the authentication target home electric appliance 5b between the home electric appliance 5b and the HG 4b. Specifically, the control section 420 reads out the PIN code 415a from the storing section 415 and transmits the PIN code 415a to the authentication target home electric appliance 5b.

In the fourth embodiment, in the case of an initial state in which a connection target home gateway apparatus is not specified, after a power supply is turned on, the home electric appliance 5b receives provisional connection for a fixed time. The home electric appliance 5b is provisionally connected to the HG 4b that accesses the home electric appliance 5b first. Before being accessed from the HG 4b, if the home electric appliance 5b is operated, the home electric appliance 5b ends the reception of the provisional connection.

During the provisional connection, the home electric appliance 5b can process a Get command from the HG 4b but rejects a Put command. During the provisional connection, when the user operates the home electric appliance 5b, after the fixed time elapses, the home electric appliance 5b stops operation by the user operation. Timing for stopping the operation is within time in which the power measuring apparatus 8 is measuring power consumption. The home electric appliance 5b determines the timing at random.

The home electric appliance 5b according to the fourth embodiment is different from the home electric appliance 5a according to the first embodiment in that the memory 510 includes an operation-analysis-data storing section 514. In the following explanation, the operation-analysis-data storing section 514 is sometimes respectively simply referred to as "storing section 514".

The storing section 514 is a storage area in which operation analysis data 514a is stored in the memory 510. When the home electric appliance 5b receives operation for the home electric appliance 5b, the home electric appliance 5b generates the operation analysis data 514a from data concerning time when operation for consuming electric power of an appliance is input to the authentication target home electric appliance 5b. The operation analysis data 514a is temporarily stored in the storing section 514 and transmitted to the HG 4b.

When the user operates the home electric appliance 5b, the control section 520 of the home electric appliance 5b causes a function of the home electric appliance 5b to operate on the basis of the user operation and stops the operation of the home electric appliance 5b after a fixed time elapses. For example, when the user inputs operation for "cooling ON" with a remote controller or the like, the control section 520 causes a cooling function of the home electric appliance 5b to operate. The control section 520 stops the cooling function in operation after the fixed time elapses irrespective of presence or absence of user operation.

The control section 520 generates the operation analysis data 514a concerning time in which the home electric appliance 5b operates according to user operation. Specifically, the control section 520 acquires an operation start time when the home electric appliance 5b is operated by the user to start operation, an operation end time when the home electric appliance 5b ends the operation, an operating time of the home electric appliance 5b, and the like and generates the operation analysis data 514a. The control section 520 causes the storing section 514 to store the generated operation analysis data 514a. The control section 520 transmits the operation analysis data 514a to the HG 4b.

The power measuring apparatus 8 is an apparatus that measures the power consumption of the home electric appliance 5b. The power measuring apparatus 8 is provided in, for example, a breaker switch. The power measuring apparatus 8 is connected to the HG 4b by wire or radio. The power measuring apparatus 8 transmits measured power measurement data or the like to the HG 4b.

The power measuring apparatus 8 includes plural sensors (not shown) for measuring electric power. When a plug socket for supplying electric power is connected to the authentication target home electric appliance 5b, one of the sensors of the power measuring apparatus 8 measures the power consumption of the authentication target home electric appliance 5b connected by the plug socket.

The power measuring apparatus 8 includes a memory 810 and a home gateway communication control device 820. The home gateway communication control device 820 is connected to the HG 4b. The memory 810 includes a power-measurement-data storing section 811.

The power measuring apparatus 8 according to the fourth embodiment has an operation mode for supporting authentication of the home electric appliance 5b. When the home electric appliance 5b operates in the operation mode for supporting authentication, the power measuring apparatus 8 continuously measures, on the basis of an instruction input via the HG 4b, the power consumption of the home electric appliance 5b associated with the sensor for a predetermined time, generates power measurement data 811a, and stores the power measurement data 811a in the power-measurement-data storing section 811. The power measuring apparatus 8 measures the power consumption of the home electric appliance 5b for a measurement time designated from the HG 4b and generates the power measurement data 811a. Then, the power measuring apparatus 8 transmits the generated power measurement data 811a to the HG 4b.

In this embodiment, the power measuring apparatus 8 may be any apparatus as long as the apparatus can sequentially measure power consumption in the predetermined time of the authentication target home electric appliance 5b and output the power measurement data 811a.

In the explanation in the fourth embodiment, the power measuring apparatus 8 transmits the power measurement data 811a to the HG 4b and the HG 4b generates the power analysis data 416a from the power measurement data 811a. However, the present invention is not limited to this case. The power measuring apparatus 8 may calculate an operation start time or the like from power measurement data and transmit power analysis data or the authentication supporting server 1b may transmit power analysis data from power measurement data.

### Authentication method

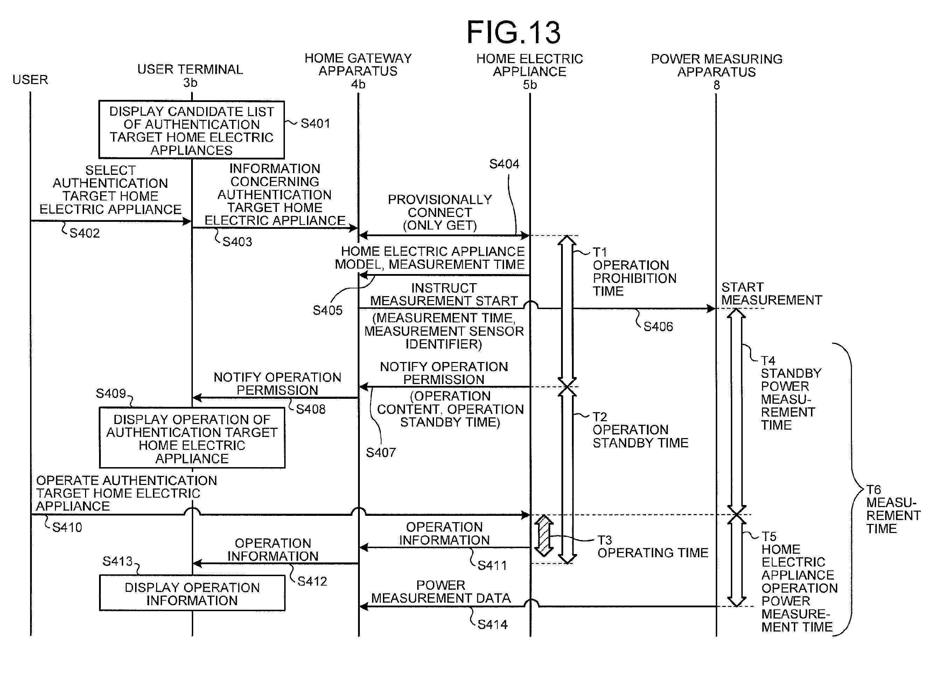

An authentication method according to the fourth embodiment is explained with reference to FIGS. 13 to 15. Prior to the authentication method, the user sets the HG 4b and a power measuring apparatus 8b in a state in which the HG 4b and the power measuring apparatus 8b can be authenticated. Further, the user inserts the plug socket of the home electric appliance 5b into the power supply and supplies electric power to the home electric appliance 5b.

First, in step S401, the user terminal 3b displays a candidate list of authentication target home electric appliances on the display device 350. For example, the user terminal 3b reads out the power measurement control data 311a from the storage device 310 and displays, as candidates of authentication target home electric appliances, identifiers of home electric appliances included in the power measurement control data 311a.

When the user selects the authentication target home electric appliance 5 via the input device 340 in step S402, in step S403, the user terminal 3b transmits information concerning the home electric appliance 5 to the HG 4b. The information concerning the home electric appliance include an identifier of the home electric appliance selected in the user terminal 3b and an identifier of the sensor of the power measuring apparatus 8 for measuring the power consumption of the home electric appliance. The authentication target home electric appliance designated by the user is assumed to be the home electric appliance 5b.

When the HG 4b acquires the information concerning the authentication target home electric appliance 5b from the user terminal 3b, in step S404, the HG 4b and the authentication target home electric appliance 5b are provisionally connected to each other. The provisional connection is a state in which the HG 4b can get data of the home electric appliance 5b but cannot put the data.

When the HG 4b and the home electric appliance 5b are provisionally connected, the home electric appliance 5b transitions to a state in which the home electric appliance 5b does not receive operation for an operation prohibition time T1. The operation prohibition time T1 is time required by the power measuring apparatus 8 to shift to a state in which the power consumption of the home electric appliance 5b can be measured. If the home electric appliance 5b is operated in the operation prohibition time T1, the home electric appliance 5b may transmit failure of the authentication to the HG 4b and cut the provisional connection. The home electric appliance 5b may determine that the provisionally-connected HG 4b is a malicious apparatus, store an identifier of the HG 4b, and, thereafter, reject access from the HG 4b. However, even in this case, the home electric appliance 5b is desirably initialized to be capable of receiving access from the HG 4b.

When the HG 4b and the home electric appliance 5b are provisionally connected, in step S405, the home electric appliance 5b transmits a model name of the home electric appliance 5b and a measurement time T6 for measuring electric power to the HG 4b. The measurement time T6 is time such as "two minutes".

When the HG 4b receives data of the model name of the home electric appliance 5b and the measurement time T6, in step S406, the HG 4b transmits a measurement start instruction to the power measuring apparatus 8. The measurement start instruction includes information concerning an identifier of a sensor for measuring the power consumption of the authentication target home electric appliance 5b and the measurement time T6 for measuring electric power of the authentication target home electric appliance 5b.

When the power measuring apparatus 8 receives the measurement start instruction, during the measurement time T6 designated by the measurement start instruction, the power measuring apparatus 8 starts measurement of the power consumption of the authentication target home electric appliance 5b designated by the measurement start instruction. At this point, the power measuring apparatus 8 generates the power measurement data 811a in which transition of power consumption for each time is sequentially recorded. Until the home electric appliance 5b starts operation by user operation, the power measuring apparatus 8 is in a standby power measurement time T4 for measuring the standby power.

On the other hand, when the operation prohibition time T1 elapses in the home electric appliance 5b, in step S407, the home electric appliance 5b transmits an operation permission notification to the HG 4b and, during operation standby time T2, stands by for operation of the home electric appliance 5b from the user. The operation permission notification includes operation content of operation by the user and the operation standby time T2. The operation content is content of operation for the home electric appliance 5b by the user such as "cooling ON". The operation depends on a type and a model name of the home electric appliance 5b. The operation is operation for generating power consumption enough for making it possible to determine, from the power measurement data 811a measured by the power measuring apparatus 8, timing when the function of the home electric appliance 5b is caused to operate by operation for the home electric appliance 5b. The operation standby time T2 is a limited time for causing the user to operate the home electric appliance 5b such as "one minute".

If the home electric appliance 5b is not operated at all during the operation standby time T2, the home electric appliance 5b may transmit failure of the authentication to the HG 4b and cut the provisional connection. The home electric appliance 5b may determine that the provisionally-connected HG 4b is a malicious apparatus, store an identifier of the HG 4b, and, thereafter, reject access from the HG 4b. However, even in this case, the home electric appliance 5b is desirably initialized to be capable of receiving access from the HG 4b.

When the HG 4b receives the operation permission notification from the home electric appliance 5b, in step S408, the HG 4b transmits the operation permission notification to the user terminal 3b. The operation permission notification includes operation content of operation by the user and the operation standby time T2.

When the user terminal 3b receives the operation permission notification, in step S409, the user terminal 3b acquires the operation content input to the authentication target home electric appliance 5b and the operation standby time T2 from the operation permission notification and displays the operation content and the operation standby time T2 on the display device 350. For example, the user terminal 3b displays, on the display device 350, "please turn on cooling within one minute".

If operation content is not included in the operation permission notification transmitted from the home electric appliance 5b, the HG 4b may specify operation content of operation by the user from the model name of the home electric appliance 5b notified in step S405 and transmit the operation content to the user terminal 3b. If the operation standby time T2 is not included in the operation permission notification transmitted from the home electric appliance 5b, similarly, the HG 4b may determine the operation standby time T2 and transmit the operation standby time T2 to the user terminal 3b.

In step S410, the user operates, according to the operation content displayed on the display device 350 of the user terminal 3b, the input device 340 of the authentication target home electric appliance 5b within the operation standby time T2. When the home electric appliance 5b receives operation from the user, the home electric appliance 5b operates according to the operation.

On the other hand, when the home electric appliance 5b receives operation from the user, in step S411, the home electric appliance 5b may transmit, to the HG 4b, a message to the effect that the home electric appliance 5b is operated. In step S412, the HG 4b may a message to that effect to the user terminal 3b. When the user terminal 3b is informed that the home electric appliance 5b is operated, in step S413, the user terminal 3b displays a message to that effect on the display device 350.

When the home electric appliance 5b operates according to the operation from the user, the home electric appliance 5b records an operation start time when the operation is started. After operating for an operating time T3, the home electric appliance 5b stops the operation. The home electric appliance 5b records the operating time T3 and an operation end time when the operation is stopped. The home electric appliance 5b determines the operating time T3 at random. The home electric appliance 5b desirably stops the operation before the measurement time T6 of the power measuring apparatus 8 expires.

On the other hand, when the measurement time T6 expires in the power measuring apparatus 8, in step S414, the power measuring apparatus 8 transmits the power measurement data 811a to the HG 4b. The power measurement data 811a is data obtained by the power measuring apparatus 8 continuously measuring the power consumption of the home electric appliance 5b for the measurement time T6.

In step S451, the HG 4b generates the power analysis data 416a from the power measurement data received in step S414. In step S452, the HG 4b transmits the power analysis data 416a to the authentication supporting server 1b. The HG 4b calculates an operation start time, the operating time T3, and an operation end time of the home electric appliance 5b by user operation and generates the power analysis data 416a on the basis of the power measurement data received in step S414. In step S452, the HG 4b transmits the generated power analysis data 416a to the authentication supporting server 1b.

On the other hand, in step S453, the home electric appliance 5b generates the operation analysis data 514a from the operation start time, the operation end time, and the operating time recorded during the operation of the home electric appliance 5b. In step S454, the home electric appliance 5b transmits the generated operation analysis data 514a to the HG 4b. When the HG 4b receives the operation analysis data 514a from the home electric appliance 5b, in step S455, the HG 4b transmits the operation analysis data to the authentication supporting server 1b.

In step S456, the authentication supporting server 1b compares the power analysis data 416a received in step S452 and the operation analysis data 514a received in step S455 and determines whether the operation start times, the operating times, and the operation end times respectively coincide with each other.

If the operation start times, the operating times, and the operation end times do not respectively coincide with each other, in step S457, the authentication supporting server 1b transmits an authentication denial response to the HG 4b. When the authentication supporting server 1b receives the authentication denial response, in step S458, the authentication supporting server 1b transmits a message to that effect to the user terminal 3b and causes the display device 350 to display that effect.

On the other hand, if the operation start times, the operating times, and the operation end times respectively coincide with each other, in step S459, the authentication supporting server 1b transmits an instruction to authenticate a home electric appliance to the HG 4b. When the HG 4b receives the instruction to authenticate a home electric appliance, in step S460, the HG 4b authenticates the authentication target home electric appliance 5b and transmits the PIN code 415a to the home electric appliance 5b. Thereafter, the HG 4b can put data in the home electric appliance 5b and can transmit data for controlling the home electric appliance 5b. Further, in step S461, the HG 4b transmits, to the user terminal 3b, a message to the effect that the authentication target home electric appliance 5b is authenticated and causes the display device 350 to display a message to that effect.

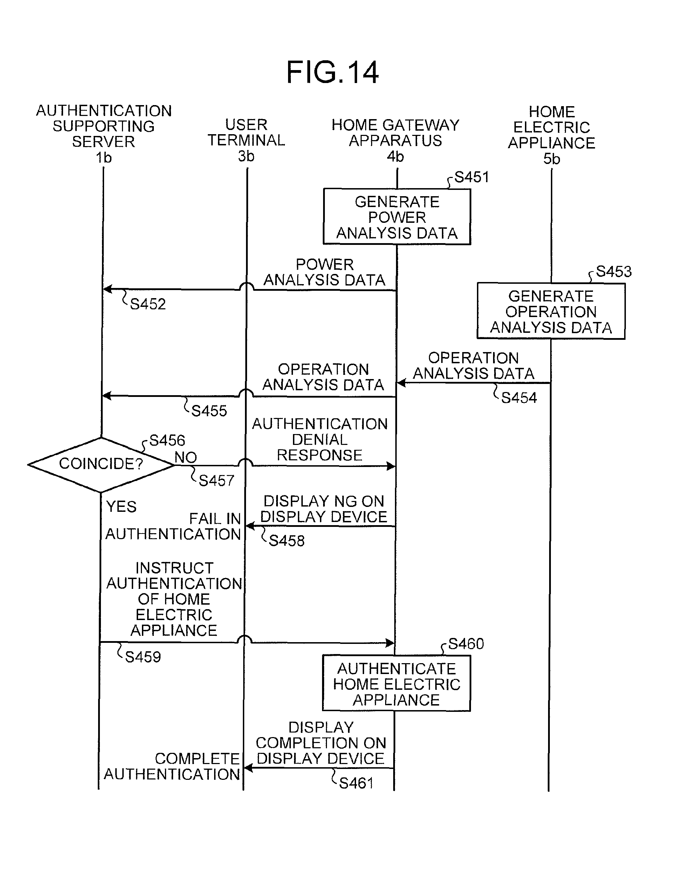

In examples shown in FIGS. 13 and 14, after starting the measurement of electric power in step S406, the power measuring apparatus 8 measures the power consumption of the home electric appliance 5b for the measurement time T6. The power measuring apparatus 8 measures the standby power of the home electric appliance 5b for the time T4 until the home electric appliance 5b receives operation from the user in step S410. Thereafter, the power measuring apparatus 8 measures the operating power of the home electric appliance 5b for the time T5 until the measurement time T6 expires. The home electric appliance 5b starts operation for the home electric appliance operating power measurement time T5. The home electric appliance 5b stops the operation after operating for the operating time T3.

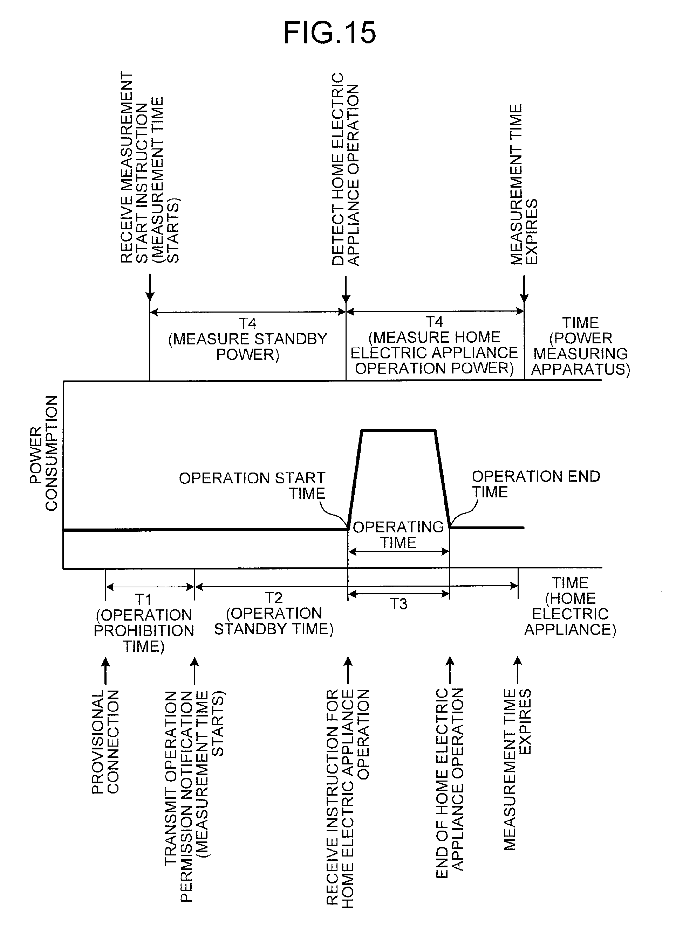

A relation between the processing shown in FIGS. 13 and 14 and the power consumption of the authentication target home electric appliance 5b is explained with reference to FIG. 15. In an example shown in FIG. 15, the processing in the power measuring apparatus 8 is described on the horizontal axis in the upper part and the processing in the authentication target home electric appliance 5b is described on the horizontal axis in the lower part.

When the HG 4 and the home electric appliance 5b are provisionally connected, the power consumption of the authentication target home electric appliance 5b is equivalent to the standby power. In the operating time T3, the power consumption of the home electric appliance 5b rises according to the operation of the home electric appliance 5b in response to an instruction of user operation. When the operation of the home electric appliance 5b is stopped, the power consumption returns to the standby power again.

When the power measuring apparatus 8 receives an instruction for measurement start from the HG 4b, the power measuring apparatus 8 starts measurement of the power consumption of the authentication target home electric appliance 5b for the measurement time T6. The power measuring apparatus 8 sequentially records the power consumption of the home electric appliance 5b and obtains a graph of power consumption shown in FIG. 15. It is determined from data of the power consumption shown in FIG. 15, timing when the power consumption increases from the standby power is the operation start time and timing when the power consumption returns to the standby power is the operation end time. It is determined that a difference between the operation start time and the operation end time is the operating time. The power analysis data according to the fourth embodiment includes the operation start time, the operation end time, and the operating time determined from the transition of the power consumption in this way.

According to the fourth embodiment, the user can cause the HG 4b to authenticate connection of the HG 4b with the home electric appliance 5b simply by operating the authentication target home electric appliance 5b at least once. The home electric appliance 5b can operate according to control data transmitted from the HG 4b.

### Fifth Embodiment

In the explanation in the fourth embodiment, the authentication supporting server 1b supports the authentication with the PIN codes by comparing the operation of the home electric appliance 5b by user operation of the home electric appliance 5b and the power consumption of the home electric appliance 5b caused by the operation of the home electric appliance 5b. In a fifth embodiment, an information processing apparatus that supports authentication is a user terminal 3c.

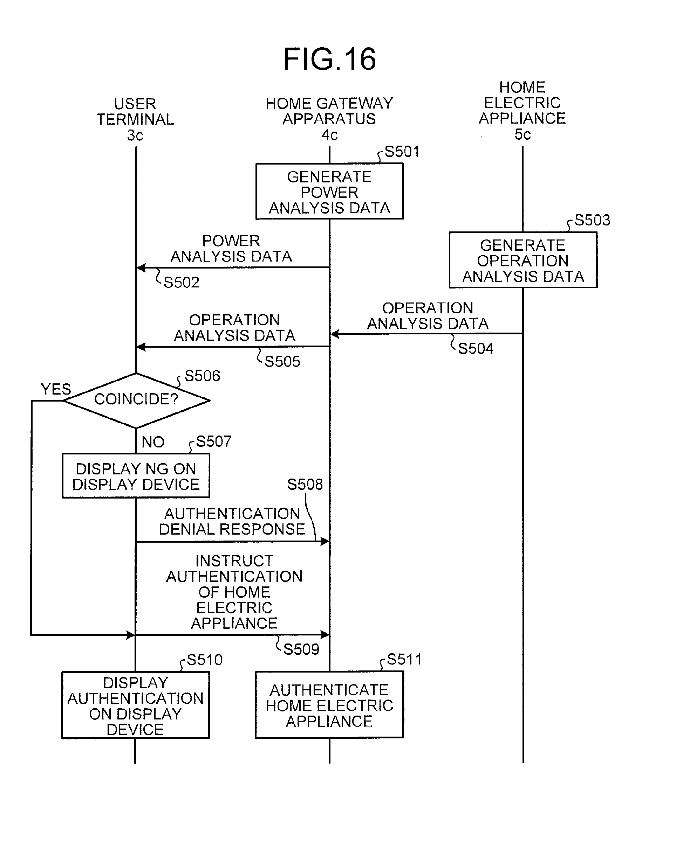

An authentication supporting method according to the fifth embodiment is explained. In the authentication supporting method according to the fifth embodiment, step S401 to step S414 shown in FIG. 13 in the authentication supporting method according to the fourth embodiment are common. Processing after step S414 is different. The processing after step S414 shown in FIG. 13 in the fifth embodiment is explained with reference to FIG. 16.

In step S501, an HG 4c generates the power analysis data 416a from the power measurement data received in step S414. In step S502, the HG 4c transmits the power analysis data 416a to the user terminal 3c.

On the other hand, in step S503, a home electric appliance 5c generates the operation analysis data 514a from the operation start time, the operation end time, and the operating time recorded during the operation of the home electric appliance 5c. In step S504, the home electric appliance 5c transmits the generated operation analysis data 514a to the HG 4c. When the HG 4c receives the operation analysis data 514a from the home electric appliance 5c, in step S505, the HG 4c transmits the operation analysis data 514a to an authentication supporting server 1c.

In step S506, the user terminal 3c compares the power analysis data 416a received in step S502 and the operation analysis data 514a received in step S505 and determines whether the operation start times, the operating times, and the operation end times respectively coincide with each other.

If the operation start times, the operating times, and the operation end times do not respectively coincide with each other, in step S507, the user terminal 3c displays denial of the authentication on the display device 350. In step S508, the user terminal 3c transmits an authentication denial response to the HG 4c. The HG 4c stops the authentication of the home electric appliance 5c.

On the other hand, if the operation start times, the operating times, and the operation end times respectively coincide with each other, in step S509, the user terminal 3c transmits an instruction to authenticate a home electric appliance to the HG 4c. In step S510, the user terminal 3c displays, on the display device 350, a message to the effect that the authentication target home electric appliance 5c is authenticated.

When the HG 4c receives the instruction to authenticate a home electric appliance, in step S511, the HG 4c authenticates the authentication target home appliance 5c and transmits the PIN code 415a to the home electric appliance 5c. Thereafter, the HG 4c can put data in the home electric appliance 5c and transmit data for controlling the home electric appliance 5c.

### Sixth Embodiment

In the following explanation in a sixth embodiment, an information processing apparatus that supports authentication is an HG 4d.

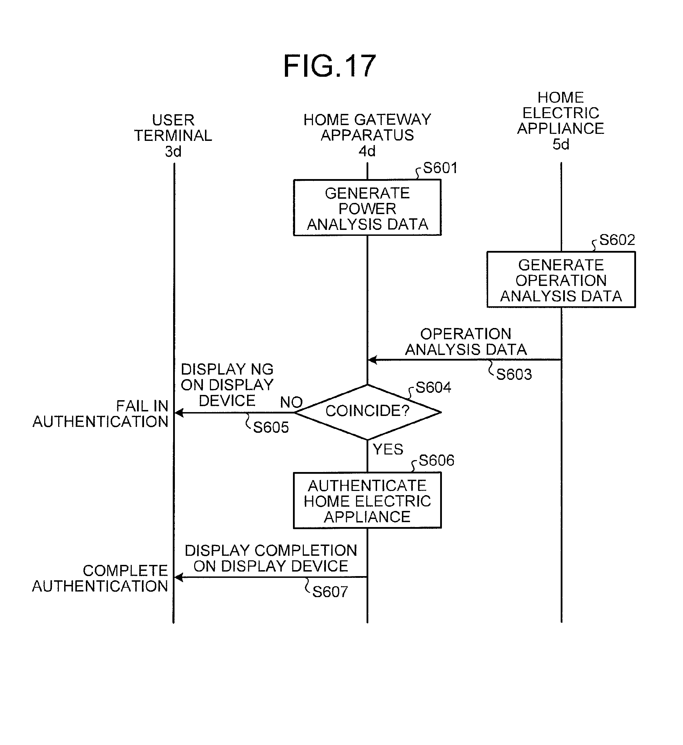

An authentication supporting method according to the sixth embodiment is explained. In the authentication supporting method according to the sixth embodiment, step S401 to step S414 shown in FIG. 13 in the authentication supporting method according to the fourth embodiment are common. Processing after step S414 is different. The processing after step S414 shown in FIG. 13 in the sixth embodiment is explained with reference to FIG. 17.

In step S601, an HG 4d generates the power analysis data 416a from the power measurement data received in step S414.

On the other hand, in step S602, a home electric appliance 5d generates the operation analysis data 514a from the operation start time, the operation end time, and the operating time recorded during the operation of the home electric appliance 5d. In step S603, the home electric appliance 5d transmits the generated operation analysis data 514a to the HG 4d.

In step S604, the HG 4d compares the power analysis data 416a received in step S601 and the operation analysis data 514a received in step S603 and determines whether the operation start times, the operating times, and the operation end times respectively coincide with each other.

If the operation start times, the operating times, and the operation end times do not respectively coincide with each other, in step S604, the HG 4d stops the authentication of the home electric appliance 5d. In step S605, the HG 4d transmits a message to that effect to a user terminal 3d. The user terminal 3d displays failure of the authentication on the display device 350.

On the other hand, if the operation start times, the operating times, and the operation end times respectively coincide with each other, in step S606, the HG 4d authenticates the authentication target home electric appliance 5d and transmits the PIN code 415a to the home electric appliance 5d. Thereafter, the HG 4d can put data in the home electric appliance 5d and transmit data for controlling the home electric appliance 5d. Further, in step S607, the HG 4d transmits a message to that effect to the user terminal 3d. The user terminal 3d displays success of the authentication on the display 350.

### Seventh Embodiment

In the following explanation in a seventh embodiment, an information processing apparatus that supports authentication is a home electric appliance 5e.

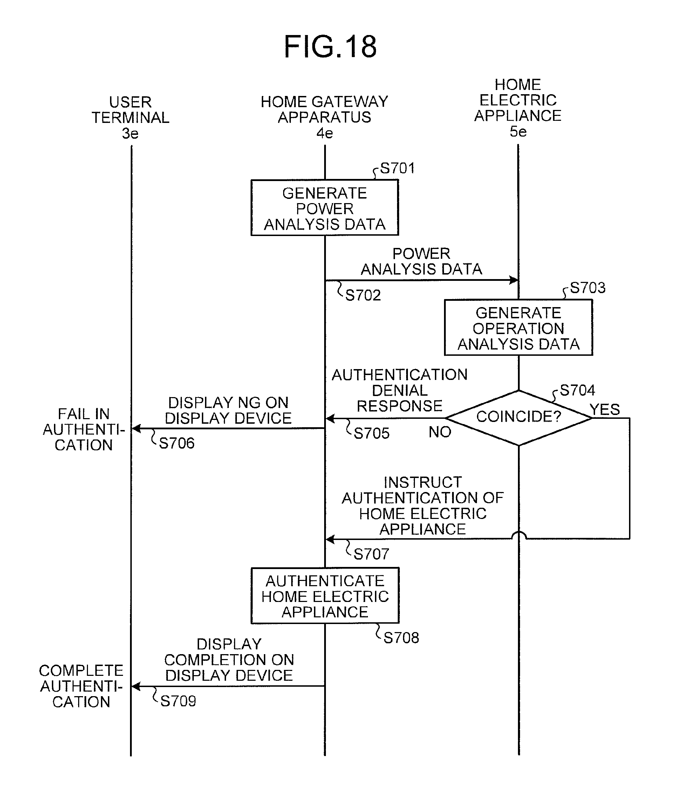

An authentication supporting method according to the seventh embodiment is explained. In the authentication supporting method according to the seventh embodiment, step S401 to step S414 shown in FIG. 13 in the authentication supporting method according to the fourth embodiment are common. Processing after step S414 is different. The processing after step S414 shown in FIG. 13 in the seventh embodiment is explained with reference to FIG. 18.

In step S701, an HG 4e generates the power analysis data 416a from the power measurement data received in step S414. In Step S 702, the HG 4e transmits the generated power analysis data 416a to the home electric appliance 5e.

On the other hand, in step S703, a home electric appliance 5e generates the operation analysis data 514a from the operation start time, the operation end time, and the operating time recorded during the operation of the home electric appliance 5e.

In step S704, the home electric appliance 5e compares the power analysis data 416a received in step S702 and the operation analysis data 514a generated in step S703 and determines whether the operation start times, the operating times, and the operation end times respectively coincide with each other.

If the operation start times, the operating times, and the operation end times do not respectively coincide with each other, in step S705, the home electric appliance 5e transmits an authentication denial response to the HG 4e. The HG 4e stops the authentication and transmits a message to that effect to a user terminal 3e. In step S706, the user terminal 3e displays failure of the authentication on the display device 350.

On the other hand, if the operation start times, the operating times, and the operation end times respectively coincide with each other, in step S707, the home electric appliance 5e transmits an instruction to authenticate a home electric appliance to the HG 4e. In step S708, the HG 4e authenticates the authentication target home electric appliance 5e and transmits the PIN code 415a to the home electric appliance 5e. Thereafter, the HG 4e can put data in the home electric appliance 5e and transmit data for controlling the home electric appliance 5e. Further, in step S709, the HG 4e transmits a message to that effect to the user terminal 3e. The user terminal 3e displays success of the authentication on the display device 350.

According to at least one embodiment explained above, the user can easily connect an appliance to a network.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus (1, 3a, 1b) that causes a gateway apparatus (4,4b) to authenticate communication with a target appliance (5), the information processing apparatus comprising:
a first acquiring section (121, 322) configured to acquire authentication operation data used to authenticate communication between the gateway apparatus (4,4b) and the target appliance (5);
a second acquiring section (123, 323, 126) configured to acquire input operation data input by a user into the target appliance (5);
a collating section (124, 325, 124b) configured to determine whether the authentication operation data and the input operation data coincide with each other; and
a transmitting section (125, 325) configured to transmit to the gateway apparatus (4,4b), when the collating section (124, 325, 124b) determines that the authentication operation data and the input operation data coincide with each other, a signal to authenticate the communication between the gateway apparatus (4,4b) and the target appliance (5).

2. The apparatus (1, 3a, 1b) according to claim 1, wherein the transmitting section (125, 325) is configured to transmit to the gateway apparatus (4,4b), when the collating section (124, 325, 124b) determines that the authentication operation data and the input operation data do not coincide with each other, a signal to notify the user of failure in authentication.

3. The apparatus (1, 3a) according to claim 1, further comprising a storing section (111, 311) configured to store appliance data in which a plurality of appliance types and input types are associated with each other, wherein
the first acquiring section (121, 322) generates the input operation data from an input type associated with an appliance type of the target appliance (5).

4. The apparatus (1, 3a) according to claim 1, wherein the first acquiring section (121, 322) generates the authentication operation data on the basis of a plurality of types of inputs that can be input into the target appliance (5).

5. The apparatus (1, 3a) according to claim 1, wherein the first acquiring section (121, 322) generates first and second authentication operation data and the collating section (124, 325) determines that the authentication operation data and the input operation data coincide with each other if the first authentication operation data coincides with a first input operation data and the second authentication operation data coincides with a second input operation data.

6. An information processing program for causing a gateway apparatus to authenticate communication with a target appliance, the information processing program causing a computer to execute information processing for:
acquiring authentication operation data used to authenticate communication between the gateway apparatus and the target appliance;
acquiring input operation data input by a user into the target appliance;
determining whether the authentication operation data and the input operation data coincide with each other; and
transmitting, when it is determined that the authentication operation data and the input operation data coincide with each other, a signal to authenticate the communication between the gateway apparatus and the target appliance.
